# EUROPEAN PATENT SPECIFICATION

(11) **EP 0 886 959 B1**
(45) Date of publication and mention of the grant of the patent: **02.08.2006**
(21) Application number: 97949171.9
(22) Date of filing: 19.12.1997
(51) Int. Cl.: H04N 1/21, H04N 1/387

(54) **PRINTING SYSTEM**
DRUCKSYSTEM
SYSTEME D'IMPRIMERIE

(30) Priority: 25.12.1996 JP 34584296
(43) Date of publication of application: 30.12.1998
(73) Proprietor: CASIO COMPUTER CO., LTD., Shibuya-ku, Tokyo 151-8543 (JP)
(72) Inventor: HANDA, Akihiro, Tokyo 198 (JP); ISHIKAWA, Tomohisa, Kawagoe-shi, Saitama 350 (JP)
(74) Representative: Grünecker, Kinkeldey, Stockmair & Schwanhäusser Anwaltssozietät
(86) International application number: PCT/JP1997/004712
(87) International publication number: WO 1998/030020

(56) References cited:
- EP-A- 0 647 057
- EP-A- 0 675 648
- WO-A-95/16323
- GB-A- 2 242 592

## Description

The present invention relates to a printing system which sends image data of a still picture, recorded on an printing unit like a digital camera, to a printer and prints a corresponding Image on the printer, and, more particularly, to a printing system suitable In the case of synthesizing Image data of a still picture, recorded on an printing unit, and pattern data like an illustration and printing the synthesized image.

### BACKGROUND ART

Recently, digital cameras which record images as digital data that can be processed by a personal computer are available on the market as one type of an Image recording apparatus.

This digital camera has a lens and CCD (Charge Coupled Device) for acquiring still pictures, and a liquid crystal display, which- serves as a view finder at the time of recording still pictures and as a monitor at the time of reproducing the recorded still pictures.

A digital image recorded by this digital camera is loaded Into a personal computer and processed by software installed In the personal computer. The processed image is sent to, and printed, by a printer connected to the personal computer.

Because such a printing system requires a personal computer, it becomes expensive. Complex is an operation for allowing the personal computer to process image data, and it is difficult to easily and quickly print Images recorded in a digital camera.

Recently has therefore been developed a printing system which can connect a digital camera to a printer directly and via no personal computer, transfer image data of a still picture to the printer from the digital camera and print it. In this printing system, it is the image data of a still picture, recorded by a digital camera, itself that is to be printed, and no consideration is given to Insertion of other data into the image data.

There is an increasing demand of synthesizing an image, recorded by a digital camera, with a pattern like an illustration and printing the resultant image. In the conventional printing system which has a digital camera connected directly to a printer, however, the printer could do nothing but print an image corresponding to image data sent from the digital camera.

The conventional printing system of such a kind could not meet the aforementioned demand.
WO 95/16323 A1 discloses an instant special effects electronic camera. Fun special effects may be added to the pictures. The camera is a camera with an integral direct thermal printer.
EP 0 647 057 A1 describes a system for custom imprinting a variety of articles with images obtained from a variety of different sources. A first digital generated image is combined with one or more prestored digital images. One of the prestored digital images is selected.
GB 2 242 592 A describes a technique of producing a picture, of a subject against a selected background.
EP 0 675 648 A2 describes an electronic imaging system using a removable software-enhanced storage device. A signal processing section is provided for operating upon the electronically captured image prior to storage. Enhancement files are preloaded into the storage device. The electrically captured image is modified in selected ways. Non-captured image-like data is communicated to the camera.

### SUMMARY OF THE INVENTION

It is the object of the invention to provide a printing system and corresponding apparatus and methods where an image recording apparatus (digital camera) is connected to a printing apparatus via no personal computer and where an image is printed corresponding to image data resulting from synthesizing image data, recorded by the image recording apparatus, with patttern data.
This object is solved by the invention as claimed in the independent claims.
Preferred embodiments are defined in the dependent claims.

It is an aspect of this invention to allow an image corresponding to image data synthesized with pattern data to be checked before printing in such a printing system.

It is a further aspect of this invention to reduce the amount of data to be exchanged between an image recording apparatus and a printing apparatus via a transfer path in such a printing system.

It is a still further aspect of this invention to provide an image recording apparatus and a printing apparatus which are used in such a printing system.

A printing system according to an embodiment of this invention comprises an image recording apparatus (100) having an image acquiring unit (1-6) for acquiring image data of a still picture and an image memory (9) for storing the image data acquired by the image acquiring unit (1-6); and a printing apparatus (200), connected by a transfer path (30) to the Image recording apparatus (100), for printing an image corresponding image data transmitted from the image recording apparatus (100) via the transfer path (30),
the printing apparatus (200) including:
a pattern data memory (24) for storing pattern data to be synthesized with image data stored in the image memory (9); and
a pattern transmitting unit (20) for transmitting the pattern data, stored in the pattern data memory (24), to the image recording apparatus (100),
the Image recording apparatus (100) including:
   a pattern receiving unit (12) for receiving the pattern data transmitted from the pattern transmitting unit (20);
   a synthesized data generator (12) for synthesizing the pattern data, received by the pattern receiving unit (12), with the image data stored in the image memory (9); and
   an image supply unit (12) for supplying the Image data synthesized with the pattern data by the synthesized data generator (12) to the printing apparatus (200) via the transfer path (30).

In the printing system according to the first embodiment pattern data is sent to the image recording apparatus (100) from the printing apparatus (200) and Is synthesized with image data, stored In the Image memory (9), In the image recording apparatus (100). The image data synthesized with the pattern data is supplied to the printing apparatus (200) and a corresponding image is printed. This makes It possible to synthesize a pattern like an illustration into an Image recorded by the image recording apparatus (100). What is more, as pattern data is stored in the pattern data memory (24) In the printing apparatus (200), the image recording apparatus (100) need not hold pattern data at the time of recording an image.

A printing system according to the second embodiment of this invention comprises an image recording apparatus (100) having an image acquiring unit (1-6) for acquiring image data of a still picture, a compressing unit (8) for compressing the image data acquired by the image acquiring unit (1-6) and an image memory (9) for storing the image data compressed by the compressing unit (8); and a printing apparatus (200), connected by a transfer path (30) to the image recording apparatus (100), for printing an image corresponding image data transmitted from the image recording apparatus (100) via the transfer path (30),
the printing apparatus (200) including:
a pattern data memory (24) for storing pattern data to be synthesized with image data stored in the image memory (9) In a compressed form; and
a pattern transmitting unit (20) for transmitting the compressed pattern data, stored In the pattern data memory (24), to the image recording apparatus (100),
the image recording apparatus (100) including:
a pattern receiving unit (12) for receiving the compressed pattern data transmitted from the pattern transmitting unit (20);
an expanding unit (8) for expanding the compressed pattern data received by the pattern receiving unit (12);
a synthesized data generator (12) for synthesizing the pattern data, expanded by the expanding unit (8), with the image data stored In the image memory (9); and
an image supply unit (12) for supplying the image data synthesized with the pattern data by the synthesized data generator (12) to the printing apparatus (200) via the transfer path (30).

In the printing system according to the second embodiment pattern data is sent in a compressed form to the image recording apparatus (100) from the printing apparatus (200) and is synthesized with image data, stored In a compressed form In the image memory (9), In the image recording apparatus (100) after both are expanded. The image data synthesized with the pattern data after expansion is supplied to the printing apparatus (200) and a corresponding Image is printed. This makes it possible to synthesize a pattern like an illustration into an image recorded by the image recording apparatus (100). As pattern data is stored in a compressed form in the pattern data memory (24) In the printing apparatus (200), it is compressed pattern data that is to be supplied via the transfer path (30) to the image recording apparatus (100) from the printing apparatus (200). It is thus possible to shorten a communication time required to supply pattern data to the image recording apparatus (100) from the printing apparatus (200).

The image recording apparatus (100) may further include a compressing unit (8) for compressing the Image data synthesized with the pattern data by the synthesized data generator (12), and may supply the image data compressed by the compressing unit (8) to the printing apparatus (200) via the transfer path (30) from the image supply unit (12). In this case, the printing apparatus (200) has an expanding unit (20) for expanding the compressed image data supplied from the Image supply unit (12), and can print the Image data expanded by the expanding unit (20).

With this structure, it is compressed image data that is to be supplied via the transfer path (30) to the printing apparatus (200) from the image recording apparatus (100). It is therefore possible to shorten a communication time needed to supply image data to the printing apparatus (200) from the image recording apparatus (100).

In the printing systems according to the first and second embodiments, the image recording apparatus (100) may further include a display unit (19) for displaying a still picture corresponding to the image data synthesized with the pattern data by the synthesized data generator (12).

The provision of this display unit can permit a user to check an image corresponding to image data synthesized with pattern data before that image data is printed.

A printing system according to the third embodiment of this invention comprises an image recording apparatus (100) having an image acquiring unit (1-6) for acquiring image data of a still picture, an image memory (9) for storing image data corresponding to a plurality of still pictures acquired by the image acquiring unit (1-6), a display unit (19) for displaying still pictures corresponding to the image data stored in the image memory (9), and a control unit (12) for controlling the image memory (9) and the display unit (19) in response to an external instruction; and a printing apparatus (200), connected by a transfer path (30) to the image recording apparatus (100), for printing an image corresponding Image data transmitted from the image recording apparatus (100) via the transfer path (30),
the printing apparatus (200) including:
a display instruction unit (23b, 20) for sending a display instruction signal for sequentially reading Image data corresponding to a plurality of still pictures from the image memory (9) and displaying corresponding still pictures on the display unit (19), to the control unit (12) via the transfer path (30);
an image selecting unit (23c, 20) for selecting at least one of the image data corresponding to the plurality of still pictures to be displayed on the display unit (19) based on an instruction from the display instruction unit (23b, 20);
a pattern data memory (24) for storing plural types of pattern data to be synthesized with Image data stored In the image memory (9);
a menu data memory (24) for storing menu data corresponding to a menu to be displayed on the display unit (19) for selecting one of the plural types of pattern data;
a pattern selecting unit (23b, 23c, 20) for selecting desired pattern data from among the plural types of pattern data in accordance with the menu corresponding to the menu data displayed on the display unit (19); and
a pattern transmitting unit (20) for reading the pattern data, selected by the pattern selecting unit (23b, 23c, 20) from the pattern data memory (24) and transmitting the read pattern data to the image recording apparatus (100),
the image recording apparatus (100) including:
a pattern receiving unit (12) for receiving the pattern data transmitted from the pattern transmitting unit (20);
a synthesized data generator (12) for synthesizing the pattern data, received by the pattern receiving unit (12), with the Image data stored In the Image memory (9); and
an image supply unit (12) for supplying the image data synthesized with the pattern data by the synthesized data generator (12) to the printing apparatus (200) via the transfer path (30).

In the printing system according to the third embodiment, when the pattern selecting unit (23b, 23c, 20) is manipulated to select one of plural types of pattern data, pattern data is sent to the image recording apparatus (100) from the printing apparatus (200). By operating the Image selecting unit (23c, 20), one of image data corresponding to a plurality of still pictures stored in the image memory (9) is selected. The selected pattern data and image data are synthesized by the synthesized data generator (12) In the image recording apparatus (100). The image data synthesized with the pattern data is supplied to the printing apparatus (200) and a corresponding image is printed. Because pattern data which permits a pattern like an illustration to be synthesized with an image recorded by the image recording apparatus (100) is stored in the pattern data memory (24) in the printing apparatus (200), the image recording apparatus (100) need not retain pattern data at the time of recording an image. What is more, selection of pattern data and image data can easily accomplished by using the display unit (19).

In the printing system according to third embodiment, the control unit (12) may cause the display unit (19) to display a still picture corresponding to the image data synthesized with the pattern data by the synthesized data generator (12).

This can allow a user to check an image corresponding to image data synthesized with pattern data before that image data is printed.

A printing apparatus according to the fourth embodiment of this invention, which is connected by a transfer path (30) to an image recording apparatus (100) and prints an image corresponding image data transmitted from the image recording apparatus (100) via the transfer path (30), comprises:
a pattern data memory (24) for storing pattern data to be synthesized with image data stored In an image memory (9) of said image recording apparatus (100),
whereby an image corresponding to image data synthesized with the pattern data and recorded In the image recording apparatus (100) Is printed.

This printing apparatus may further comprise a pattern transmitting unit (20), for transmitting the pattern data, stored in the pattern data memory (24), to the Image recording unit (100). In this case, image data corresponding to the image to be printed, synthesized with the pattern data, can be synthesized In the image recording apparatus (100) and can be supplied via the transfer path (30).

An image recording apparatus according to the fifth embodiment of this invention, which is connected by a transfer path (30) to a printing apparatus (200) for printing an Image, comprises:
an image acquiring unit (1-6) for acquiring image data of a still picture;
an image memory (9) for storing the Image data acquired by the image acquiring unit (1-6);
an image supply unit (12) for supplying image data corresponding to an image to be printed by the printing apparatus (200) to the printing apparatus (200); and
a synthesized data generator (12) for synthesizing pattern data with the image data stored in the image memory (9),
whereby the image supply unit (12) supplies the Image data synthesized with the pattern data by the synthesized data generator (12) to the printing apparatus (200).

In this image recording apparatus, the pattern data to be synthesized with the image data may be supplied via the transfer path (30) from the printing apparatus (200).

The above image recording apparatus may further comprise a display unit (19) for displaying a still picture corresponding to the image data synthesized with the pattern data by the synthesized data generator (12).

### BRIEF DESCRIPTION OF DRAWINGS

FIG. 1 is a perspective view illustrating the structure of a printing system according to one mode of this invention;
FiG. 2 Is a block diagram showing the circuit structures of a digital camera and a printer In this mode;
FIG. 3 is a diagram depicting a pattern selecting menu for selecting a pattern to be synthesized with an image recorded by the digital camera In this mode;
FIGS. 4A through 4D are diagrams showing patterns to be synthesized with an image recorded by the digital camera in this mode;
FIG. 5 Is a diagram exempting a printout of a synthesized Image obtained by synthesizing an image recorded by the digital camera In this mode with a pattern; and
FIG. 6 is a flowchart illustrating the operation of a printing process for synthesizing an image recorded by the digital camera In this mode with a pattern.

### DETAILLED DESCRIPTION OF THE INVENTION

One mode of the present invention will now be described with reference to the accompanying drawings.

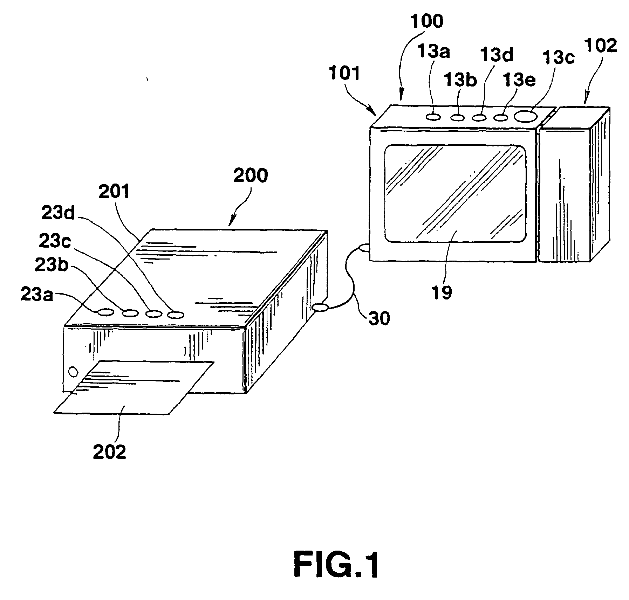

FIG. 1 is a perspective view illustrating the structure of a printing system according to one mode of this Invendon.

This printing system comprises a digital camera 100 and a printer 200 connected together by a communication cable 30. The communication cable 30 is detachable from the digital camera 100 and the printer 200. ,

The digital camera 100 has a camera body 101 and a lens unit 102 provided at one side of the camera body. Provided at the back (the front side in FIG. 1) of the camera body 101 is a color liquid crystal display (display section) 19, which serves as a view finder to show an image to be recorded In a record mode and as a monitor to show a recorded Image In a playback mode. Provided on the top of the camera body 101 are various kinds of keys necessary to operate the digital camera 100, such as a power key 13a, an operation mode setting key 13b, a shutter button 13c, a "+" key 13d and a "-" key 13e. Of those keys, the power key 13a serves to power on or off the digital camera 100. The operation mode setting key 13b sets the operation mode of the digital camera 100 to a record mode or a playback mode, both of which will be discussed later. The shutter button 13c is used to bring an image into the digital camera 100 in record mode. The "+" key 13d serves to cause the color LCD 19 to sequentially display images, recorded in the digital camera, forward in playback mode. The "-" key 13e serves to cause the color LCD 19 to sequentially display images, recorded in the digital camera, backward in playback mode.

The lens unit 102 has an image pickup lens, and is attached rotatable to the camera body 101. The image pickup lens, though not shown in FIG. 1, is provided in the front of the camera body 101 (the rear side in FIG. 1).

The printer 200 is a color thermal transfer printer equipped with a printing mechanism including a thermal print head and a feeding mechanism for recording paper 202. The printer 200 thermally transfers inks retained on color printing ink ribbons of yellow (Y), magenta (M) and cyan (C), installed in the printing mechanism, on recording paper 202 to thereby provide a color print of image data received from the digital camera 100.

Provided on a printer body 201 are various kinds of keys necessary to operate the printer or for the remote operation of the digital camera, such as a power key 23a, a display instruction key 23b, a select key 23c and a print type designation key 23d. The power key 23a serves to power on or off the printer 200. The display instruction key 23b is for giving an instruction to display an image, recorded in the digital camera 100, on the color LCD 19. The select key 23c serves to select an image to be printed from images which are sequentially displayed on the color LCD 19 of the digital camera 100. The image that is displayed on the color LCD 19 when the select key 23c is operated is printed by the printer 200. The print type designation key 23d is used to switch between normal printing for printing an image recorded by the digital camera 100 alone and synthesized printing for synthesizing an image recorded by the digital camera 100 with a predetermined pattern and printing the result.

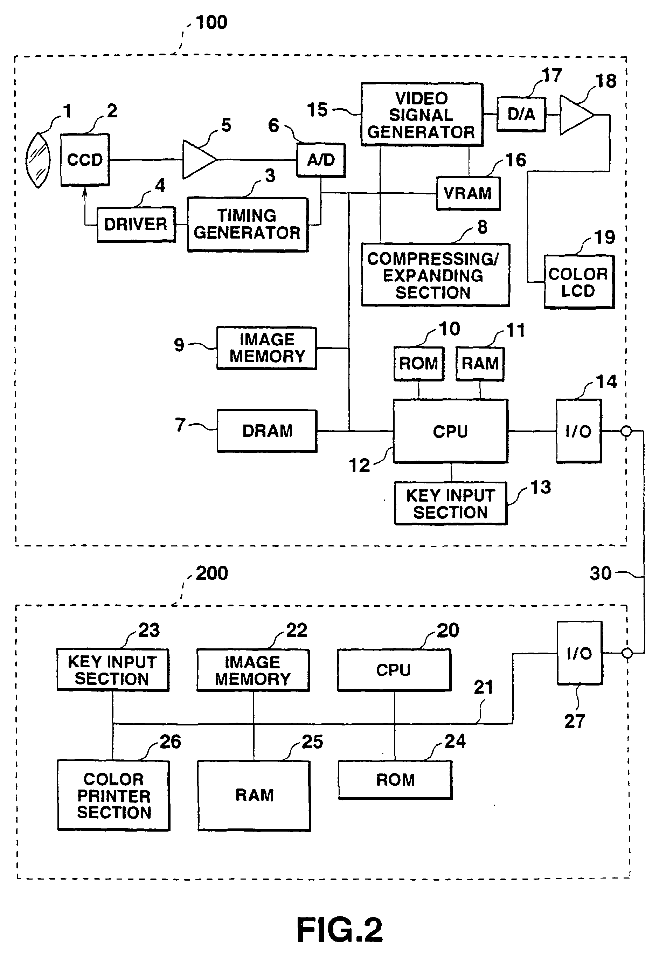

FIG. 2 is a block diagram showing the circuit structures of the digital camera 100 and the printer 200.

First, the circuit structure of the digital camera 100 will be discussed referring to FIG. 2.

The digital camera 100 has a lens 1 which forms an optical image of an image to be photographed, and its circuit comprises a CCD (Charge Coupled Device) 2, a timing generator 3, a driver 4, an amplifier 5, an analog-to-digital (A/D) converter 6, a DRAM 7, a compressing/expanding section 8, an image memory 9, a ROM 10, a RAM 12, a key input section 13, an I/O port 14, a video signal generator 15, a VRAM 16, a digital-to-analog (D/A) converter 17, an amplifier 18 and the color LCD 19. The timing generator 3 generates a timing signal for controlling the driver 4. The driver 4 drives the CCD 2 based on the timing signal from the timing generator 3. The CCD 2 photoelectrically converts an optical image formed by the lens 1 to an analog image signal and outputs this signal. The amplifier 5 amplifies the analog image signal output from the CCD 2.

The A/D converter 6 converts the analog image signal, which has been output from the CCD 2 and amplified by the amplifier 5, to a digital image signal. The DRAM 7 temporarily stores the digital image signal converted by the A/D converter 6.

The compressing/expanding section 8 performs an encoding process on the digital image signal to compress image data. This data compression employs, for example, the JPEG (Joint Photographic Experts Group) system which is the encoding standards for color still pictures. The compressing/expanding section 8 also performs a decoding process on a digital image signal to expand compressed image data. The compressing/expanding section 8 is constituted by hardware such as a special-purpose LSI. Of course, the compressing/expanding function can be accomplished by software in which case the CPU 12 should execute a process according to a program for the compressing/expanding process stored in the ROM 10.

The image memory 9, which is a flash memory, stores image data of a still picture, which has been compressed by the compressing/expanding section 8. The image memory 9 has a memory capacity enough to store image data of a plurality of still pictures.

The ROM 10 retains a program for controlling the digital camera 100. This program includes a program which is run when the digital camera 100 is connected via the communication cable 30 to the printer 200.

The RAM 11 is used as a work area for the CPU 12 to temporarily store intermediate data, generated in an arithmetic operation, or the like. The RAM 11 temporarily stores pattern data which is transferred from the printer 200. The RAM 11 is also used in a process of synthesizing image data of a still picture, which is stored in the image memory 9 with the pattern data.

The CPU 12 uses the work area in the RAM 11 and operates according to a program stored in the ROM 10. The CPU 12 controls the individual sections of the digital camera 100 in response to an operation signal input by each operation key of the key input section 13, or a control signal sent from the printer 200 via the I/O port 14.

As mentioned earlier, the key input section 13 has the power key 13a, the operation mode setting key 13b, the shutter button 13c, the "+" key 13d and the "-" key 13e.

The video signal generator 15 affixes a sync signal or the like to a digital image signal to generate a digital video signal.

The VRAM 16 stores the digital video signal generated by the video signal generator 15.

The D/A converter 17 converts the digital video signal output from the video signal generator 15 to an analog video signal.

The amplifier 18 amplifies the analog video signal from the D/A converter 17 and supplies the amplified signal to the color LCD 19.

The color LCD 19 drives liquid crystal based on the analog video signal, supplied via the amplifier 18 from the D/A converter 17, to display an image corresponding to the analog video signal.

The I/O port 14 is an interface which receives and outputs an image signal and a control signal which have been converted to serial signals.

The operation of the digital camera 100 will be discussed below.

The digital camera 100 records image data of a still picture when set in record mode by the operation of the operation mode setting key 13b.

When the shutter button 13c is operated while the digital camera 100 is set in record mode, the CPU 12 causes the timing generator 3 to generate an image acquisition signal. In response to the image acquisition signal, the CCD 2 is driven to receive an optical image formed by the lens 1 as an analog image signal. This analog image signal is amplified by the amplifier 5, and is then converted by the A/D converter 6 to a digital image signal, which is temporarily stored in the DRAM 7. The CPU 12 performs a luminance signal generating process and color signal generating process on the digital image signal, stored in the DRAM 7, to generate a luminance signal and a color signal. The generated luminance signal and color signal are compressed by the compressing/expanding section 8, and then stored in the image memory 9 as image data.

The image data of one still picture consists of pixels of, for example, 640 dots by 480 dots.

When set in playback mode by the operation of the operation mode setting key 13b, the digital camera 100 reproduces an image corresponding to recorded image data.

When the digital camera 100 is set in playback mode, the CPU 12 reads image data (compressed luminance signal and compressed color signal) from the image memory 9 and causes the compressing/expanding section 8 to expand the image data. A digital image signal consisting of the luminance signal and color signal expanded by the compressing/expanding section 8 is transferred to the video signal generator 15. The video signal generator 15 affixes a sync signal to the digital image signal to generate a digital video signal, and write this signal into the VRAM 16. An image corresponding to the image data written in the VRAM 16 is displayed on the color LCD 19.

The structure of the printer 200 will now be discussed with reference to FIG. 2.

The printer 200 comprises a CPU 20, an image memory 22, a key input section 23, a ROM 24, a RAM 25, a color printer section 26, and an I/O section 27. The components 22-27 are connected to the CPU 20 by a bus 21.

In FIG. 2, the key input section 23 of the printer 200 has various keys, such as the power key 23a, the display instruction key 23b and the select key 23c, as mentioned earlier.

The image memory 22 stores print data resulting from conversion of image data of a still picture which has been transferred from the digital camera 100 and temporarily stored in the RAM 25. This print data consists of a set of image data of three colors, yellow (Y), magenta (M) and cyan (C). This image memory 22 has a capacity for storing print data of at least one set of still pictures.

The ROM 24 retains an operation program for a communication process, a data expanding process, a printing process, a synthesized printing process, etc., which are executed by the CPU 20. The ROM 24 also retains, in a compressed form, pattern data to be synthesized with image data recorded by the digital camera 100. Further menu data which is displayed on the display section 19 of the digital camera 100 to select desired pattern data is stored compressed in the ROM 24.

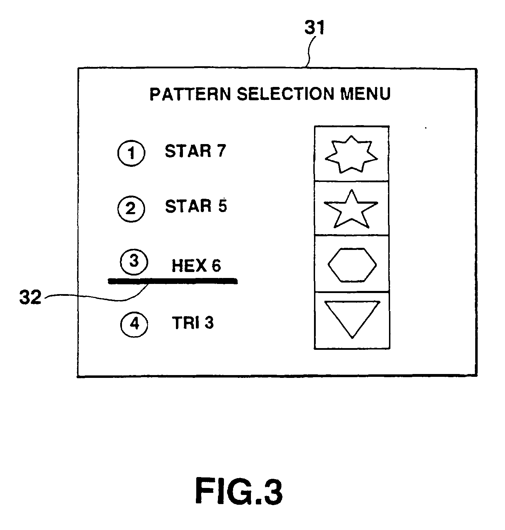

FIG. 3 shows a pattern selecting menu 31 which is displayed on the display section 19 of the digital camera 100 based on the menu data. The pattern selecting menu 31 shows the names of selectable patterns on the lefthand side, and patterns corresponding to the pattern names on the right-hand side. In the pattern selecting menu 31 shown in FIG. 3, four types of patterns, "STAR7," "STARTS", "HEX6" and "TR13," are available for selection.

In FIG. 3, reference numeral "32" denotes a cursor, which is placed at the desired pattern name shown in the pattern selecting menu 31 to select the pattern. This cursor 32 sequentially moves under any pattern name by operating the display instruction key 23c of the printer 200.

Image data corresponding to the pattern selecting menu 31 is prestored in the ROM 24 in a compressed form using the compression technique of, for example, the JPEG system.

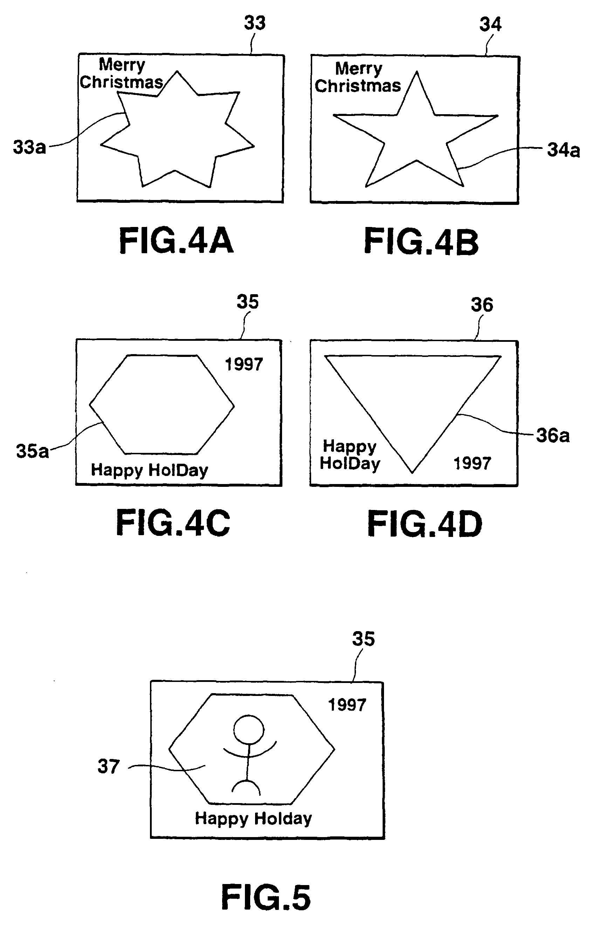

FIGS. 4A through 4D show four types of patterns 33 to 36 selectable from the pattern selecting menu 31 in FIG. 3, pattern data corresponding to those patterns are stored compressed in the ROM 24. Also stored in the ROM 24 are pattern names in association with data corresponding to the patterns 33-36.

In the patterns 33-36, colors, patterns or characters are affixed outside contours 33a-36a of a star, hexagon, triangle, etc., and corresponding pattern data includes those data of color, etc. Colors, etc. are not affixed inside the contours 33a-36a, so that there is no data in corresponding pattern data. Characters "Merry Christmas" are given to the patterns 33 and 34. Characters "Happy Holiday" and "1997" are given to the patterns 35 and 36. Those patterns 33-36 are used to print greeting cards, for example.

Pattern data corresponding to the patterns 33-36, like image data recorded by the digital camera 100, consists of pixels of, for example, 640 dots by 480 dots.

In the printer 200 in FIG. 2, the RAM 25 has a work area for an arithmetic operation the CPU 20 performs and a print buffer memory area which is used in printing.

The color printer section 26 has a printing mechanism including a thermal print head and a feeding mechanism for the recording paper 202, and prints a full-color image by using ink ribbons for color printing.

An image which is printed by the color printer section 26 becomes a synthesized image of the pattern 35 synthesized with an image 37 recorded by the digital camera 100, as shown in FIG. 5, when synthesized printing is designated by the print type designation key 23d. When synthesized printing is designated, an image similar to the synthesized image shown in FIG. 5 is also displayed on the color LCD 19 of the digital camera 100.

The I/O section 27, connected via the cable 30 to the I/O section 14 of the digital camera 100, exchanges an image signal and a control signal with the digital camera 100.

The operation of this printer 200 will be described next.

This printer 200 can execute normal printing for printing an image recorded by the digital camera 100 alone and synthesized printing for synthesizing a pattern with an image recorded by the digital camera 100 and printing the result. The normal printing and synthesized printing are switched from one to the other by operating the print type designation key 23d.

The normal printing will be discussed.

Connect the digital camera and the printer 200 by the communication cable 30 and set the digital camera in playback mode by operating the operation mode setting key 13b. In response to the setting of the playback mode, the first image data stored in the image memory 9 is read and then expanded by the compressing/expanding section 8 under the control of the CPU 12. The color LCD 19 displays an image corresponding to the expanded image data. When the user manipulates the display instruction key 23b of the printer 200 under this situation, a corresponding control signal is transferred via the communication cable 30 to the digital camera 100. Upon reception of this control signal, the CPU 12 of the digital camera 100 reads the next image data to the one currently displayed on the color LCD 19 from the image memory 9 and displays an image corresponding to that image data on the color LCD 19. Every time the display instruction key 23b of the printer 200 is operated, image data stored in the image memory 9 is read out and an image corresponding to that image data is displayed on the color LCD 18 in order.

When the user operates the select key 23c of the printer 200 while a desired image is displayed on the color LCD 19, a control signal instructing the transfer of the image data of the image currently displayed on the color LCD 19 is sent to the digital camera 100 from the printer 200 in response to the operation of the select key 23c of the printer 200. In response to this control signal, the CPU 12 of the digital camera 100 reads image data corresponding to the currently displayed image from among image data stored in the image memory 9 and transfers it to the printer 200.

When receiving compressed image data sent from the digital camera 100, the printer 200 temporarily stores it in the RAM 25. The CPU 20 expands the image data, temporarily stored in the RAM 25. The CPU 20 prepares print data consisting of a set of image data of three colors, yellow (Y), magenta (M) and cyan (C), from the expanded image data, and stores it in the image memory 22. Based on the print data stored in this image memory 22, the color printer section 26 transfers the inks retained in the color ink ribbons onto the recording paper 202 one on another to print an image corresponding to the print data.

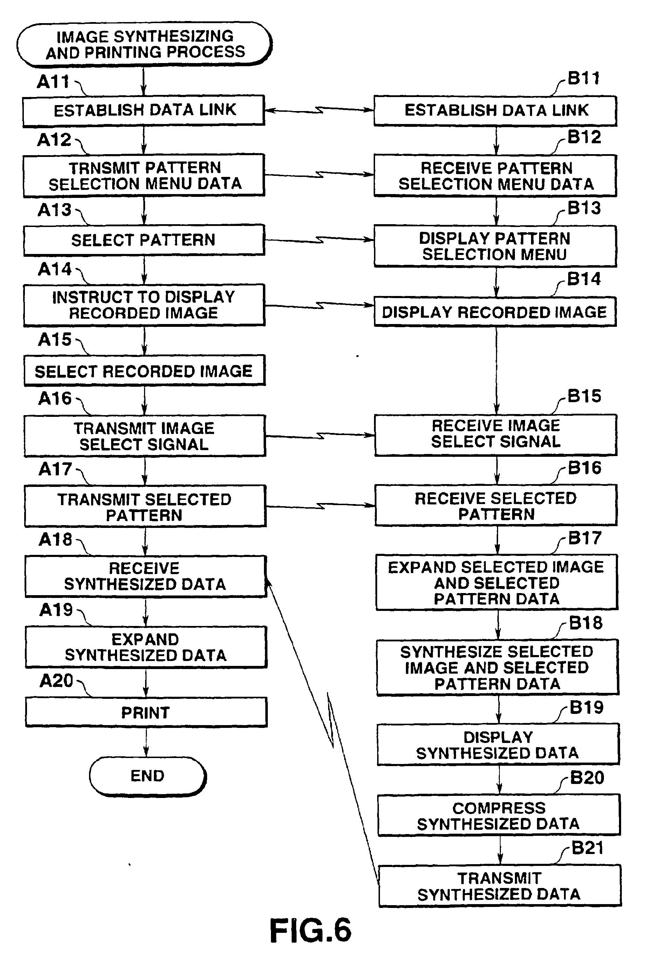

Referring to the flowchart in FIG. 6, a description will be given of an operation in synthesized printing in which the digital camera 100 is connected to the printer 200 by the communication cable 30 and image data of a still picture recorded by the digital camera 100 is synthesized with pattern data and the result is printed by the printer 200.

In FIG. 6, the flow on the left side indicates a process in the printer 200, and the right flow indicates a process in the digital camera 100. The processing in this flowchart is initiated when the digital camera 100 and the printer 200 are connected together by the communication cable 30 and are both powered on, and synthesized printing is designated by the print type designation key 23d of the printer 200.

When the processing starts, a data link between the digital camera 100 and the printer 200 is established first (step A11, step B11).

When the data link between the digital camera 100 and the printer 200 is established, menu data for pattern selection is read from the ROM 24 of the printer 200 and is sent to the digital camera 100 from the printer 200 via the I/O section 27 (step A12).

The digital camera 100 receives the menu data for pattern selection, sent from the printer in step A12, via the I/O section 14. This menu data is stored in the RAM 11 (step B12).

The CPU 12 of the digital camera 100 causes the compressing/expanding section 8 to expand this menu data for pattern selection and displays the pattern selecting menu 31 as shown in FIG. 3 on the display section 19 (step B13).

The user operates the keys in the key input section 23 of the printer 200 to select a desired pattern from among patterns in the pattern selecting menu 31.

In selecting a pattern, in response to the operation of the display instruction key 23b, a control signal according to that key operation is transferred to the digital camera 100 from the printer 200. The CPU 12 of the digital camera 100 sequentially moves the cursor 32 displayed on the pattern selecting menu 31 under any pattern name every time it receives the control signal. With the cursor 32 placed at the desired pattern name, the user operates the select key 23c to select the pattern.

When the pattern is selected through the above-described operation, the pattern name corresponding to the selected pattern is stored in the RAM 25 of the printer 200 (step A13).

Next, the user operates the display instruction key 23b provided in the key input section 23 of the printer 200 to instruct the digital camera 100 to display an image. In response to the operation of the display instruction key 23b, a control signal (display instruction signal) is output and the output display instruction signal is transmitted to the digital camera 100 via the I/O section 27 (step A14).

In response to this display instruction signal, the digital camera 100 sequentially reads compressed image data from the image memory 9. The read image data is expanded by the compressing/expanding section 8 and is then written in the VRAM 16. The color LCD 19 sequentially displays an image corresponding to the image data written in the VRAM 16 (step B16).

With the desired image displayed on the color LCD 19 of the digital camera 100, the user operates the select key 23c provided in the key input section 23 of the printer 200 to select that image (step A15).

In response to the operation of the select key 23c, the CPU 20 of the printer 200 outputs a control signal (image select signal) for selecting this image and transmits it to the digital camera 100 via the I/O section 27 (step A16). The CPU 20 reads pattern data (compressed data) corresponding to the pattern selected in step A13 from the ROM 24 and sends it to the digital camera 100 via the I/O section 27 (step A17).

The digital camera 100 receives the image select signal, sent from the printer 200 in step A16, via the I/O section 14 and stores the head address of the image memory 9 where image data corresponding to the selected image is stored (step B15). The digital camera 100 receives the pattern data (compressed data), sent from the printer 200 in step A17, and stores it in the RAM 11 (step B16).

In accordance with the image select signal, the CPU 12 of the digital camera 100 reads image data (compressed data) from the image memory 19 based on the address stored in the RAM 11, and causes the compressing/expanding section 8 to expand in the RAM 11 the read image data and the pattern data stored in the RAM 11 (step B17).

The CPU 18 writes the pattern data expanded in step B17 over the image data to synthesize the image data with the pattern data. The synthesized data is generated in the RAM 11 (step B18).

As mentioned earlier, pattern data inside the contours 33a-36a in the patterns in FIGS. 4A-4D contains no data. Colors, patterns or characters are affixed outside the contours 33a-36a, and corresponding pattern data includes data such as color. The image data and pattern data both consist of pixels of 640 dots by 480 dots. When pattern data is written over the image data recorded by the digital camera 100, therefore, that portion of the image data which overlaps the outside of the contour 33a, ..., 36a of the pattern data is overwritten by the pattern data, and that portion of the image data which overlaps the inside of the contour 33a, ..., 36a of the pattern data is unmasked and appears as it is.

The CPU 12 displays an image corresponding to the synthesized data of the image data and pattern data on the color LCD 19 (step B19). This can allow the user to check an image corresponding to the synthesized data. Subsequently, the CPU 12 causes the compressing/expanding section 8 to compress the synthesized data prepared in the RAM 11 (step B20), and transmits the compressed synthesized data to the printer 200 via the I/O section 14 (step B21).

The printer 200 receives the synthesized data, sent from the digital camera 100 in step B21, via the I/O section 27, and stores the received synthesized data in the RAM 25 (step A18). The CPU 20 of the printer 200 invokes the program for data expansion stored in the ROM 24, and expands the synthesized data stored in the RAM 25 in accordance with this data expanding program (step A19). The CPU 20 prepares print data consisting of a set of image data of three colors, yellow (Y), magenta (M) and cyan (C), from the expanded image data.

The CPU 20 activates the printer section 20 to overlap images corresponding to image data of the individual colors of yellow (Y), magenta (M) and cyan (C), prepared in the image memory 22, on recording paper one on another and to print the result (step A20). Accordingly, a synthesized image as shown in FIG. 5 is printed.

According to the above-described mode, a color, etc. is given only to the outside of the contour 33a, ..., 36a of a pattern to be synthesized with an image recorded by the digital camera 100, and no data is present inside the contour 33a, ..., 36a of the corresponding pattern data. However, patterns used in this invention are not limited to the aforementioned ones. For example, there may be a pattern for cutting out a predetermined string of characters from an image recorded by the digital camera 100. There may be a pattern which merely masks the outside of the contours 33a-36a and allows an image recorded by the digital camera 100 to be printed in a predetermined shape. There may be a pattern which eliminates a color signal from image data of a portion outside the contour 33a, ..., 36a and allows only the corresponding portion of an image recorded by the digital camera 100 to be printed in a monochromatic form.

According to the above-described mode, the user operates the display instruction key 23b to move the cursor 32 to the desired pattern name in the pattern selecting menu 31 and operates the select key 23c to select the desired pattern. The way of selecting a pattern is not however limited to the described one. For instance, a pattern may be selected in accordance with the number of times user operates a specific key (e.g., the select key 23c) of the printer 200. The printer 200 may be provided with a plurality of numerical keys so that the user can select a pattern by operating a numerical key corresponding to the desired pattern. In those cases, when the user intends to select a pattern corresponding to "HEX6" in the pattern selecting menu 31 in FIG. 3, for example, the user will operate the select key 23c three times or operates the numeric key of "3."

## Claims

1. A printing system comprising a digital camera (100) having an image acquiring unit (1-6) for acquiring image data of a still picture, an image memory (9) for storing image data corresponding to a plurality of still pictures acquired by said image acquiring unit (1-6), and a display unit (19) for displaying still pictures corresponding to said image data stored in said image memory (9); and a printer (200), connected by a detachable transfer path (30) to said digital camera (100), said printer (200) comprises:
a pattern data memory (24) for storing plural types of pattern data to be synthesized with said image data stored in said image memory (9);
a menu data memory (24) for storing menu data corresponding to a menu to be displayed on said display unit (19) for selecting one of said plural types of pattern data;
a menu transmitting unit (20) for transmitting said menu data stored in said menu data memory (24) to said digital camera (100);
a pattern selecting unit (23b, 23c, 20) for selecting desired pattern data from among said plural types of pattern data in accordance with said menu corresponding to said menu data displayed on said display unit (19) in response to the user operation; and
a pattern transmitting unit (20) for reading said pattern data, selected by said pattern selecting unit (23b, 23c, 20) from said pattern data memory (24) and transmitting said read pattern data to said digital camera (100);
said digital camera (100) comprises:
a menu receiving unit (12) for receiving said menu data transmitted by said menu transmitting unit (20);
a menu display control unit (12) for displaying a menu corresponding to said menu data received by said menu receiving unit (12) on said display unit (19);
a pattern receiving unit (12) for receiving said pattern data transmitted from said pattern transmitting unit (20);
a synthesized data generator (12) for synthesizing said pattern data, received by said pattern receiving unit (12), with said image data stored in said image memory (9); and
an image supply unit (12) for supplying said image data synthesized with said pattern data by said synthesized data generator (12) to said printer (200) via said transfer path (30),
whereby said printer (200) prints said image data supplied from said image supply unit (12) on a recording sheet.

2. The printing system according to claim 1, wherein said digital camera (100) further comprises a synthesized image display control unit (12) for displaying said still picture corresponding to said image with which said pattern data are synthesized by said synthesized data generator (12) on said display unit (19).

3. The printing system according to claim 1 and 2, wherein said plural types of pattern data stored in said pattern data memory (24) are compressed data, and said digital camera (100) further comprises:
an expanding unit (8) for expanding said compressed pattern data received by said pattern data receiving unit (12); and
a compressing unit (8) for compressing said image data synthesized by said synthesized data generator (12), and
said printer (200) further comprises an expanding unit (20) for expanding said compressed image data supplied from said image supply unit (12).

4. The printing system according to claim 3, wherein said menu data stored in said menu data memory (24) are compressed data,
whereby, said expanding unit (8) of said digital camera (100) expands said compressed menu data received by said menu data receiving unit (12).

5. The printing system according to one of claims 1 to 4, wherein said printer further comprises:
a display instruction unit (23b, 20) for sending a display instruction signal for sequentially reading image data corresponding to a plurality of still pictures from said image memory (9) and displaying corresponding still pictures on said display unit (19), to said digital camera (100) via said transfer path (30) in response to the user operation; and
an image selecting unit (23c, 20) for sending an image selection signal for selecting at least one of said image data corresponding to said plurality of still pictures to be displayed on said display unit (19) based on an instruction from said display instruction unit (23b, 20), to said digital camera (100) via said transfer path (30) in response to the user operation, and
wherein said digital camera further comprises:
a control unit (12) for receiving an image selection signal from said image selecting unit (20, 23c), together with controlling said image memory (9) and said display unit (19) to sequentially read said image data from said image memory (9) based on a display instruction from said display instruction unit (23b, 20) to display the read image on said display unit (19).

6. A method of operating a printing system according to one of claims 1 to 5, the printing system comprising a digital camera (100) having an image acquiring unit (1-6) for acquiring image data of a still picture, an image memory (9) for storing image data corresponding to a plurality of still pictures acquired by said image acquiring unit (1-6), and a display unit (19) for displaying still pictures corresponding to said image data stored in said image memory (9); and a printer (200), connected by a detachable transfer path (30) to said digital camera (100), said method comprises:
the printer (200) storing plural types of pattern data to be synthesized with said image data stored in said image memory (9);
the printer (200) storing menu data corresponding to a menu to be displayed on said display unit (19) for selecting one of said plural types of pattern data;
the printer (200) transmitting said menu data stored in said menu data memory (24) to said digital camera (100);
the digital camera receiving said menu data transmitted by said printer; the digital camera displaying a menu corresponding to said received menu data ;
the printer (200) selecting desired pattern data from among said plural types of pattern data in accordance with said menu corresponding to said menu data displayed on said display unit (19) in response to the user operation;
the printer (200) reading said selected pattern data from a pattern data memory of said printer (24) and transmitting said read pattern data to said digital camera (100);
the digital camera receiving said pattern data transmitted from said printer;
the digital camera synthesizing said received pattern data with said image data stored in said image memory (9); and
the digital camera supplying said image data synthesized with said pattern data to said printer (200) via said transfer path (30),
whereby said printer (200) prints said supplied image data on a recording sheet.

## Patentansprüche

1. Drucksystem, das eine Digitalkamera (100) mit einer Bilderfassungseinheit (1-6) zum Erfassen von Bilddaten eines Standbildes, einem Bildspeicher (9) zum Speichern von Bilddaten, die einer Vielzahl durch die Bilderfassungseinheit (1-6) erfasster Standbilder entsprechen, und einer Anzeigeeinheit (19) zum Anzeigen von Standbildern, die den in dem Bildspeicher (9) gespeicherten Bilddaten entsprechen, sowie einen Drucker (200) umfasst, der über einen trennbaren Übertragungsweg (30) mit der Digitalkamera (100) verbunden ist, wobei der Drucker (200) umfasst:
einen Musterdatenspeicher (24) zum Speichern mehrerer Typen von Musterdaten, die mit dem in dem Bildspeicher (9) gespeicherten Bilddaten zusammenzusetzen sind;
einen Menüdatenspeicher (24) zum Speichern von Menüdaten, die einem auf der Anzeigeeinheit (19) zum Auswählen eines der mehreren Typen von Musterdaten anzuzeigenden Menü entsprechen;
eine Menüsendeeinheit (20) zum Übertragen der in dem Menüdatenspeicher (24) gespeicherten Menüdaten zu der Digitalkamera (100);
eine Musterauswähleinheit (23b, 23c, 20) zum Auswählen gewünschter Musterdaten aus den mehreren Typen von Musterdaten gemäß dem Menü, das den auf der Anzeigeeinheit (19) angezeigten Menüdaten entspricht, in Reaktion auf die Benutzerbetätigung; und
eine Mustersendeeinheit (20) zum Lesen der durch die Musterauswähleinheit (23b, 23c, 20) ausgewählten Musterdaten aus dem Musterdatenspeicher (24) und zum Senden der gelesenen Musterdaten zu der Digitalkamera (100);
wobei die Digitalkamera (100) umfasst:
eine Menüempfangseinheit (12) zum Empfangen der durch die Menüsendeeinheit (20) gesendeten Menüdaten;
eine Menüanzeige-Steuereinheit (12) zum Anzeigen eines Menüs, das den durch die Menüempfangseinheit (12) empfangenen Menüdaten entspricht, auf der Anzeigeeinheit (19);
eine Musterempfangseinheit (12) zum Empfangen der von der Mustersendeeinheit (20) gesendeten Musterdaten;
eine Einrichtung (12) zum Erzeugen zusammengesetzter Daten zum Zusammensetzen der durch die Musterempfangseinheit (12) empfangenen Musterdaten mit den in dem Bildspeicher (9) gespeicherten Bilddaten; und
eine Bildzuführeinheit (12) zum Zuführen der durch die Einrichtung (12) zum Erzeugen zusammengesetzter Daten mit den Musterdaten zusammengesetzten Bilddaten zu dem Drucker (200) über den Übertragungsweg (30),
wobei der Drucker (200) die von der Bildzuführeinheit (12) zugeführten Bilddaten auf ein Aufzeichnungsblatt druckt.

2. Drucksystem nach Anspruch 1, wobei die Digitalkamera (100) des Weiteren eine Einheit (12) zum Steuern der Anzeige der zusammengesetzten Bilddaten umfasst, um das Standbild, das dem Bild entspricht, mit dem die Musterdaten durch die Einrichtung (12) zum Erzeugen zusammengesetzter Daten zusammengesetzt wird, auf der Anzeigeeinheit (19) anzuzeigen.

3. Drucksystem nach Anspruch 1 oder 2, wobei die mehreren Typen in dem Musterdatenspeicher (24) gespeicherter Musterdaten komprimierte Daten sind und die Digitalkamera (100) des Weiteren umfasst:
eine Expansionseinheit (8) zum Expandieren der durch die Musterdaten-Empfangseinheit (12) empfangenen komprimierten Musterdaten; und
eine Kompressionseinheit (8) zum Komprimieren der durch die Einrichtung (12) zum Erzeugen zusammengesetzter Daten zusammengesetzten Bilddaten, und
wobei der Drucker (200) des Weiteren eine Expansionseinheit (20) zum Expandieren der von der Bildzuführeinheit (12) zugeführten komprimierten Bilddaten umfasst.

4. Drucksystem nach Anspruch 3, wobei die in dem Menüdatenspeicher (24) gespeicherten Menüdaten komprimierten Daten sind,
und die Expansionseinheit (8) der Digitalkamera (100) die durch die Menüdaten-Empfangseinheit (12) empfangenen komprimierten Menüdaten expandiert.

5. Drucksystem nach einem der Ansprüche 1 bis 4, wobei der Drucker des Weiteren umfasst:
eine Anzeige-Anweisungseinheit (23b, 20) zum Leiten eines Anzeigeanweisungssignals zum sequenziellen Lesen von Bilddaten, die einer Vielzahl von Standbildern entsprechen, aus dem Bildspeicher (9) und zum Anzeigen entsprechender Standbilder auf der Anzeigeeinheit (19) zu der Digitalkamera (100) über den Übertragungsweg (30) in Reaktion auf die Benutzerbetätigung; und
eine Bildauswähleinheit (23c, 20) zum Leiten eines Bildauswählsignals zum Auswählen wenigstens eines Elementes der Bilddaten, die der Vielzahl von auf der Anzeigeeinheit (19) anzuzeigenden Standbilder entsprechen, auf Basis einer Anweisung von der Anzeigeanweisungseinheit (23b, 20) zu der Digitalkamera (100) über den Übertragungsweg (30) in Reaktion auf die Benutzerbetätigung, und
wobei die Digitalkamera des Weiteren umfasst:
eine Steuereinheit (12) zum Empfangen eines Bildauswählsignals von der Bildauswähleinheit (20, 23c) zusammen mit Steuern des Bildspeichers (9) und der Anzeigeeinheit (19), um auf Basis einer Anzeigeanweisung von der Anzeigeanweisungseinheit (23b, 20) sequenziell die Bilddaten aus dem Bildspeicher (9) zu lesen und die gelesenen Bilder auf der Anzeigeeinheit (19) anzuzeigen.

6. Verfahren zum Betreiben eines Drucksystems nach einem der Ansprüche 1 bis 5, wobei das Drucksystem eine Digitalkamera (100) mit einer Bilderfassungseinheit (1 - 6) zum Erfassen von Bilddaten eines Standbildes, einem Bildspeicher (9) zum Speichern von Bilddaten, die einer Vielzahl durch die Bilderfassungseinheit (1 - 6) erfasster Standbilder entsprechen, und einer Anzeigeeinheit (19) zum Anzeigen von Standbildern, die den in dem Bildspeicher (9) gespeicherten Bilddaten entsprechen; sowie einen Drucker (200) umfasst, der durch einen trennbaren Übertragungsweg (30) mit der Digitalkamera (100) verbunden ist, wobei das Verfahren umfasst, dass:
der Drucker (200) mehrere Typen von Musterdaten speichert, die mit den in dem Bildspeicher (9) gespeicherten Bilddaten zusammenzusetzen sind;
der Drucker (200) Menüdaten speichert, die einem auf der Anzeigeeinheit (19) anzuzeigenden Menü zum Auswählen eines der mehreren Typen von Musterdaten entsprechen;
der Drucker die in dem Menüdatenspeicher (24) gespeicherten Menüdaten zu der Digitalkamera (100) sendet;
die Digitalkamera die durch den Drucker gesendeten Menüdaten empfängt;
die Digitalkamera ein Menü anzeigt, das den empfangenen Menüdaten entspricht;
der Drucker (200) gewünschte Musterdaten aus den mehreren Typen von Musterdaten gemäß dem Menü, das den auf der Anzeigeeinheit (19) angezeigten Menüdaten entspricht, in Reaktion auf die Benutzerbetätigung auswählt;
der Drucker (200) die ausgewählten Musterdaten aus einem Musterdatenspeicher des Druckers auswählt und die gelesenen Musterdaten zu der Digitalkamera (100) sendet;
die Digitalkamera die von dem Drucker gesendeten Musterdaten empfängt;
die Digitalkamera die empfangenen Musterdaten mit den in dem Bildspeicher (9) gespeicherten Bilddaten zusammensetzt; und
die Digitalkamera die mit den Musterdaten zusammengesetzten Bilddaten über den Übertragungsweg (30) dem Drucker (200) zuführt,
wobei der Drucker (200) die zugeführten Bilddaten auf ein Aufzeichnungsblatt druckt.

## Revendications

1. Système d'impression comportant une caméra numérique (100) possédant une unité d'acquisition d'image (1-6) pour acquérir des données d'images d'une image fixe, une mémoire d'image (9) pour mémoriser les données d'image correspondant à une pluralité d'images fixes acquises par ladite unité d'acquisition d'image (1-6), et une unité d'affichage (19) pour afficher les images fixes correspondant auxdites données d'image mémorisées dans ladite mémoire d'image (9) ; et une imprimante (200) reliée par un trajet de transfert amovible (30) à ladite caméra numérique (100), ladite imprimante (200) comporte :
une mémoire de données de motif (24) pour mémoriser une pluralité de types de données de motif à synthétiser avec lesdites données d'image mémorisées dans ladite mémoire d'image (9) ;
une mémoire de données de menu (24) pour mémoriser des données de menu correspondant à un menu à afficher sur ladite unité d'affichage (19) pour sélectionner l'un de ladite pluralité de types de données de motif ;
une unité de transmission de menu (20) pour transmettre lesdites données de menu mémorisées dans ladite mémoire de données de menu (54) à ladite caméra numérique (100) ;
une unité de sélection de motif (23b, 23c, 20) pour sélectionner des données de motif désirées parmi ladite pluralité de types de données de motif conformément audit menu correspondant auxdites données de menu affichées sur ladite unité d'affichage (19) en réponse à l'opération d'un utilisateur ; et
une unité de transmission de motif (20) pour lire lesdites données de motif, sélectionnées par ladite unité de sélection de motif (23b, 23c, 20) à partir de ladite mémoire de données de motif (24) et transmettre lesdites données de motif lues à ladite caméra numérique (100) ;
ladite caméra numérique (100) comporte :
une unité de réception de menu (12) pour recevoir lesdites données de menu transmises à ladite unité de transmission de menu (20) ;
une unité de commande d'affichage de menu (12) pour afficher un menu correspondant auxdites données de menu reçues par ladite unité de réception de menu (12) sur ladite unité d'affichage (19) ;
une unité de réception de motif (12) pour recevoir lesdites données de motif transmises depuis ladite unité de transmission de motif (20) ;
un générateur de données synthétisées (12) pour synthétiser lesdites données de motif, reçues par ladite unité de réception de motif (12), avec lesdites données d'image mémorisées dans ladite mémoire d'image (9) ; et
une unité d'alimentation d'image (12) pour délivrer lesdites données d'image synthétisées avec lesdites données de motif par ledit générateur de données synthétisées (12) à ladite imprimante (200) par l'intermédiaire dudit trajet de transfert (30),
moyennant quoi ladite imprimante (200) imprime lesdites données d'images délivrées depuis ladite unité d'alimentation d'image (12) sur une feuille d'enregistrement.

2. Système d'impression selon la revendication 1, dans lequel ladite caméra numérique (100) comporte en outre une unité de commande d'affichage d'images synthétisées (12) pour afficher ladite image fixe correspondant à ladite image avec laquelle lesdites données de motif sont synthétisées par ledit générateur de données synthétisées (12) sur ladite unité d'affichage (19).

3. Système d'impression selon la revendication 1 et 2, dans lequel ladite pluralité de types de données de motif mémorisées dans ladite mémoire de données de motif (24) sont des données compressées, et ladite caméra numérique (100) comporte en outre :
une unité de décompression (8) pour décompresser lesdites données de motif compressées reçues par ladite unité de réception de données de motif (12) ; et
une unité de compression (8) pour compresser lesdites données d'image synthétisées par ledit générateur de données synthétisées (12), et
ladite imprimante (200) comporte en outre une unité de décompression (20) pour décompresser lesdites données d'images compressées délivrées depuis ladite unité d'alimentation d'image (12).

4. Système d'impression selon la revendication 3, dans lequel lesdites données de menu mémorisées dans ladite mémoire de données de menu (24) sont des données compressées,
moyennant quoi ladite unité de décompression (8) de ladite caméra numérique (100) décompresse lesdites données de menu compressées reçues par ladite unité de réception de données de menu (12).

5. Système d'impression selon l'une des revendications 1 à 4, dans lequel ladite imprimante comporte en outre :
une unité d'instruction d'affichage (23b, 20) pour envoyer un signal d'instruction d'affichage afin de lire séquentiellement les données d'image correspondant à une pluralité d'images fixes à partir de ladite mémoire d'image (9) et d'afficher les images fixes correspondantes sur ladite unité d'affichage (19), à ladite caméra numérique (100) par l'intermédiaire dudit trajet de transfert (30) en réponse à l'opération de l'utilisateur ; et
une unité de sélection d'image (23c, 20) pour envoyer un signal de sélection d'image pour sélectionner au moins une desdites données d'image correspondant à ladite pluralité d'images fixes à afficher sur ladite unité d'affichage (19) en fonction d'une instruction provenant de ladite unité d'instruction d'affichage (23b, 20), à ladite caméra numérique (100) par l'intermédiaire dudit trajet de transfert (30) en réponse à l'opération de l'utilisateur, et
dans lequel ladite caméra numérique comporte en outre :
une unité de commande (12) pour recevoir un signal de sélection d'image depuis l'unité de sélection d'image (20, 23c), conjointement avec la commande de ladite mémoire d'image (9) et ladite unité d'affichage (19) pour lire séquentiellement lesdites données d'image à partir de ladite mémoire d'image (9) en fonction d'une instruction d'affichage provenant de ladite unité d'instruction d'affichage (23b, 20) pour afficher l'image lue sur ladite unité d'affichage (19).

6. Procédé de fonctionnement d'un système d'impression selon l'une des revendications 1 à 5, le système d'impression comportant une caméra numérique (100) possédant une unité d'acquisition d'image (1-6) pour acquérir des données d'image d'une image fixe, une mémoire d'image (9) pour mémoriser des données d'image correspondant à une pluralité d'images fixes acquises par ladite unité d'acquisition d'image (1-6), et une unité d'affichage (19) pour afficher des images fixes correspondant auxdites données d'image mémorisées dans ladite mémoire d'image (9) ; et une imprimante (200), reliée par un trajet de transfert amovible (30) à ladite caméra numérique (100), ledit procédé comporte :
l'imprimante (200) mémorisant une pluralité de types de données de motif à synthétiser avec lesdites données d'image mémorisées dans ladite mémoire d'image (9) ;
l'imprimante (200) mémorisant des données de menu correspondant à un menu à afficher sur ladite unité d'affichage (19) pour sélectionner l'un de ladite pluralité de types de données de motif ;
l'imprimante (200) transmettant lesdites données de menu mémorisées dans ladite mémoire de données de menu (24) à ladite caméra numérique (100) ;
la caméra numérique recevant lesdites données de menu transmises par ladite imprimante ;
la caméra numérique affichant un menu correspondant auxdites données de menu reçues ;
l'imprimante (200) sélectionnant les données de motif désirées parmi ladite pluralité de types de données de motif conformément audit menu correspondant auxdites données de menu affichées sur ladite unité d'affichage (19) en réponse à l'opération de l'utilisateur ;
l'imprimante (200) lisant lesdites données de motif sélectionnées à partir d'une mémoire de données de motif (24) de ladite imprimante et transmettant lesdites données de motif lues à ladite caméra numérique (100) ;
la caméra numérique recevant lesdites données de motif transmises à partir de ladite imprimante ;
la caméra numérique synthétisant lesdites données de motif reçues avec lesdites données d'image mémorisées dans ladite mémoire d'image (9) ; et
la caméra numérique délivrant lesdites données d'image synthétisées avec lesdites données de motif à ladite imprimante (200) par l'intermédiaire dudit trajet de transfert (30),
moyennant quoi ladite imprimante (200) imprime lesdites données d'image délivrées sur une faille d'enregistrement.
